# EUROPÄISCHE PATENTSCHRIFT

(11) **EP 0 366 986 B1**
(45) Veröffentlichungstag und Bekanntmachung des Hinweises auf die Patenterteilung: **13.09.1995**
(21) Anmeldenummer: 89118939.1
(22) Anmeldetag: 12.10.1989
(51) Int. Cl.: B29C 33/72, B30B 15/00

(54) **Vorrichtung zum Reinigen eines Formwerkzeugs von Kunststoffverarbeitungsmaschinen**
Apparatus for cleaning a mould of plastic-working machines
Dispositif pour nettoyer un moule de machines à travailler les matières plastiques

(30) Priorität: 03.11.1988 DE 3837257
(43) Veröffentlichungstag der Anmeldung: 09.05.1990
(73) Patentinhaber: Umformtechnik ERFURT GmbH, D-99086 Erfurt (DE)
(72) Erfinder: Brüssel, Richard, D-7519 Sulzfeld (DE)

(56) Entgegenhaltungen:
- DE-A- 2 526 901
- DE-B- 1 025 772
- DE-B- 1 182 127
- DE-C- 102 021
- FR-A- 2 099 596
- FR-A- 2 595 292
- GB-A- 1 228 671
- JP-A- 1 320 111
- US-A- 2 479 299
- US-A- 3 941 537
- US-A- 4 029 449
- US-A- 4 486 238
- US-A- 4 605 170

## Beschreibung

Die Erfindung betrifft eine Vorrichtung zum Reinigen eines Formwerkzeuges von Kunststoffverarbeitungsmaschinen, imsbesondere eines Formwerkzeuges von hydraulischen Pressen zum Formteilverpressen von vorzugsweise faserverstärkten Kunststoffen, nach Oberbegriff des Anspruchs 1.

Bei der Kunststoffteileherstellung mit Formwerkzeugen, die sogenannte Tauchkanten aufweisen, bleiben insbesondere im Bereich der Tauchkanten Gratreste hängen. Wenn diese Gratreste nicht entfernt werden, können diese inzwischen ausgehärteten Materialteile ins nächste Preßteil verpreßt werden und dabei zum Teil erhebliche Verschwächungen des hergestellten Formpreßteils verursachen. Die Tauchkanten werden daher, insbesondere im Falle der manuellen Beschickung der Formwerkzeuge nach jedem Arbeitsgang mit den üblichen Reinigungswerkzeugen, wie Druckluftpistolen, Bürsten und Schaber, gesäubert. Solche Arbeiten nehmen eine erhebliche Zeit in Anspruch.

Nach den Erfindundsbeschreibungen US-A-4 486 238, DE-A 25 26 901 und US-A-4 605 170 sind Vorrichtungen zum Reinigen der beiden Teile eines Formwerkzeugs von Kunststoffverarbeitungsmaschinen mittels eines Reinigungswerkzeugs bekannt, bei denen das Reinigungswerkzeug bei geöffnetem Formwerkzeug in den Zwischenraum zwischen den beiden Teilen des Formwerkzeugs einfahrbar ist. Das Reinigungswerkzeug ist auf den beiden, den Formwerkzeugteilen zugewandten Seiten mit den Konturen des Formwerkzeugs angepaßten Blasdüsen, Bürsten oder dgl. Mitteln versehen, die eventuell anhaftende Gratreste und Verunreinigungen aus den Konturen der Formwerkzeugteile beseitigen können. Die Blasdüsen bzw. Bürsten sind nur wirksam, wenn sie sich im geringen Abstand bzw. in direktem Kontakt mit den zu reinigenden Formwerkzeugteilen befinden. Deshalb entsprechen die Abmessungen des Reinigungswerkzeugs nahezu der Größe des Zwischenraumes zwischen den beiden Formwerkzeugteilen im geöffneten Zustand. Um Beschädigungen des Formwerkzeugs und des Reinigungswerkzeugs zu vermeiden, ist das Einfahren des Reinigungswerkzeugs erst möglich, wenn sich die beiden Teile des Formwerkzeugs in der vollständig geöffneten Position im Stillstand befinden. Hierdurch entsteht ein erheblicher Zeitbedarf und damit eine Verzögerung des nächsten Arbeitsganges.

Weiterhin sind nach den Dokumenten DE-B-11 82 127 und DE-C-102 021 Vorrichtungen zum Reinigen des oberen beweglichen Preßstempels von Plattenpressen bekannt, die zur Herstellung von keramischen Wand- und Fußbodenplatten (Fliesen) dienen. Dabei handelt es sich bei den reinigenden Stempelflächen um im wesentlichen ebene Flächen mit relativ kleinen Abmessungen, die auch in der Tiefe nur geringfügige Konturen aufweisen. Die Reinigungsvorrichtungen enthalten einen als Bürste ausgeführten Abstreicher, der um eine vertikale Achse schwenkbar am Preßstempel gelagert und mittels eines Kurvengetriebes vom Preßstempel bewegbar ist bzw. eine rotierende Walzenbürste, die während der Stempelbewegung mittels eines aus mehreren Getriebegliedern bestehenden Gestängen quer zur Bewegungsrichtung des Preßstempels an der unteren Fläche des Preßstempels entlang geführt wird. Bei der Kunststoffteileherstellung mit Formwerkzeugen, die sogenannte Tauchkanten aufweisen, bleiben insbesondere im Bereich der Tauchkanten Gratreste hängen, die durch quer zur Bewegung des Pressenstößels geradlinig über die Flächen der Formwerkzeuge entlang bewegbare Abstreicher bzw. Walzenbürsten allein nicht entfernt werden können. Die beiden vorgenannten Vorrichtungen zeigen auch keinen Weg zur Reinigung der unteren Werkzeugteile auf.

Es ist daher Aufgabe der vorliegenden Erfindung, die eingangs genannte Vorrichtung derart weiterzubilden, daß eine selbsttätige Reinigung des Formwerkzeuges unter geringem Zeitaufwnd durchführbar ist, wobei die Gefahr einer Beschädigung des Formwerkzeugs und der Halterungsteile gleichzeitig ausgeschlossen wird.

Diese Aufgabe wird durch eine Vorrichtung mit den im kennzeichnenden Teil des Anspruchs 1 aufgeführten Merkmalen gelöst. Die neue Vorrichtung bringt insbesondere den Vorteil, daß dadurch, daß das Reinigungswerkzeug unmittelbar an dessen Träger an der Maschine befestigt ist, eine größere Wegstrecke für das Reinigungswerkzeug eingespart wird, die andernfalls zu dessen Heranführung an das betreffende Formwerkzeugteil erforderlich ist.

Außerdem sind Beschädigungen der Reinigungsvorrichtung und der Formwerkzeuge dadurch ausgeschlossen, daß die an der Maschine (z.B. am Pressenstößel und Pressentisch einer hydraulischen Presse) vorhandenen Stellglieder für die Bewegung der Halterung der Reinigungswerkzeuge auf einfache Weise durch entsprechende Überwachung für Einrichtungen feststellen können, ob sich die Maschine bereits wieder geöffnet hat oder nicht.

Darüber hinaus bringt die erfindungsgemäße Lösung den Vorteil, daß mit der Reinigung der Formwerkzeugteile (Matrize und Patrize) bereits dann begonnen werden kann, wenn sich der beim Öffnen der Maschine vergrößernde Abstand der Formwerkzeugteile zum Einführen der Reinigungsvorrichtung gerade ausreicht. Hierzu sind zumindest Teile der Halterung mit der Öffnungsbewegung der Formwerkzeuge entsprechend einer Weiterbildung der Erfindung schwenkbar und/oder verschiebbar ausgestaltet und befestigt.

Die Erfindung eignet sich für alle Kunststoffverarbeitungsmaschinen, bei denen ein aus Patrize und Matrize bestehendes Formwerkzeug eingesetzt wird, z.B. Spritzgußmaschinen und Spritzpressen, insbesondere aber für die weit verbreiteten hydraulischen Pressen, vorzugsweise solche zum Verarbeiten von sog. SMC-(Sheet moulding compound) und IMC-(Injection moulding compound) Werkstoffe.

Zum Reinigen der Formwerkzeuge können mit der Vorrichtung nach der Erfindung die bekannten pneumatischen oder mechanischen Beaufschlagungselemente wie Luftdüsen, Bürsten oder Schaber verwendet werden. Dabei können auch

Kombinationen verschiedener Beaufschlagungselemente, insbesondere abwechselnd angeordnete Luftdüsen und Bürsten zum Einsatz gelangen. Die vorgesehene auswechselbare Anordnung der Beaufschlagungselemente an ihren Halterungen ermöglicht es selbstredend auch, bei Bedarf verschiedene Beaufschlagungselemente bzw. Kombinationen davon leicht gegeneinander auszutauschen. Die Austauschbarkeit ermöglicht es ferner, nach Größe und Formgestaltung der Formwerkzeuge sowie auch nach den Adhäsions-, Härte-, Elastizitäts- und Biegsamkeitseigenschaften des insbesondere im Tauchkantenbereich abgelagerten Materials auszuwählen.

Weitere vorteilhafte Ausgestaltungen der Erfindung sind in den Ansprüchen 2 bis 7 wiedergegeben.

Die Erfindung ist nachfolgend anhand eines Ausführungsbeispiels einer mit einer Reinigungsvorrichtung versehenen hydraulischen Presse anhand der Zeichnung näher erläutert.

Es zeigt:
- Fig. 1: eine hydraulische Presse in Frontansicht,
- Fig. 2a und 2b: jeweils einen Schnitt durch das bewegliche Pressenoberteil (Fig. 2a) und das feste Pressenunterteil (Fig. 2b) nach der Linie II-II in Fig. 1.

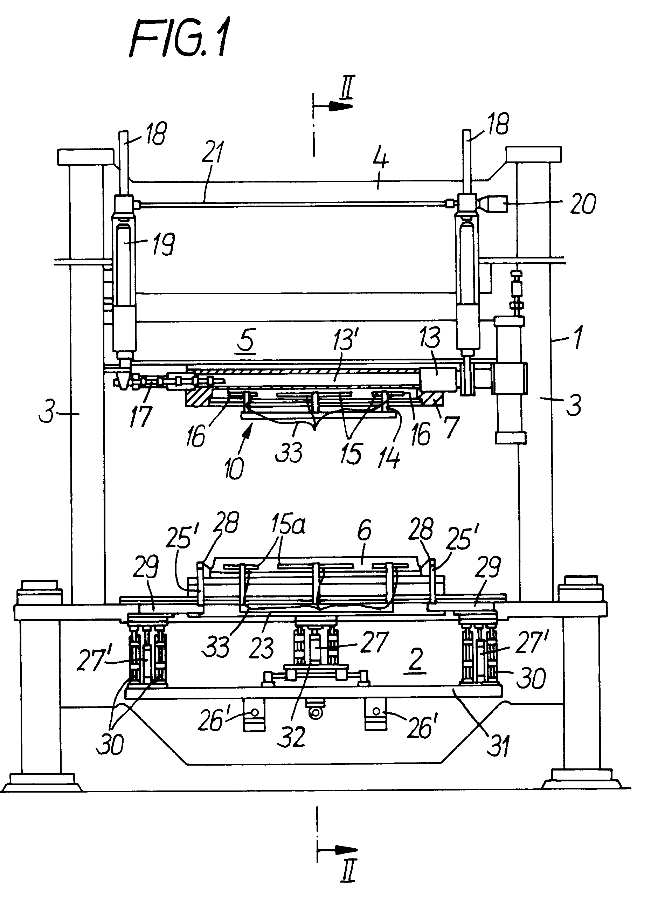

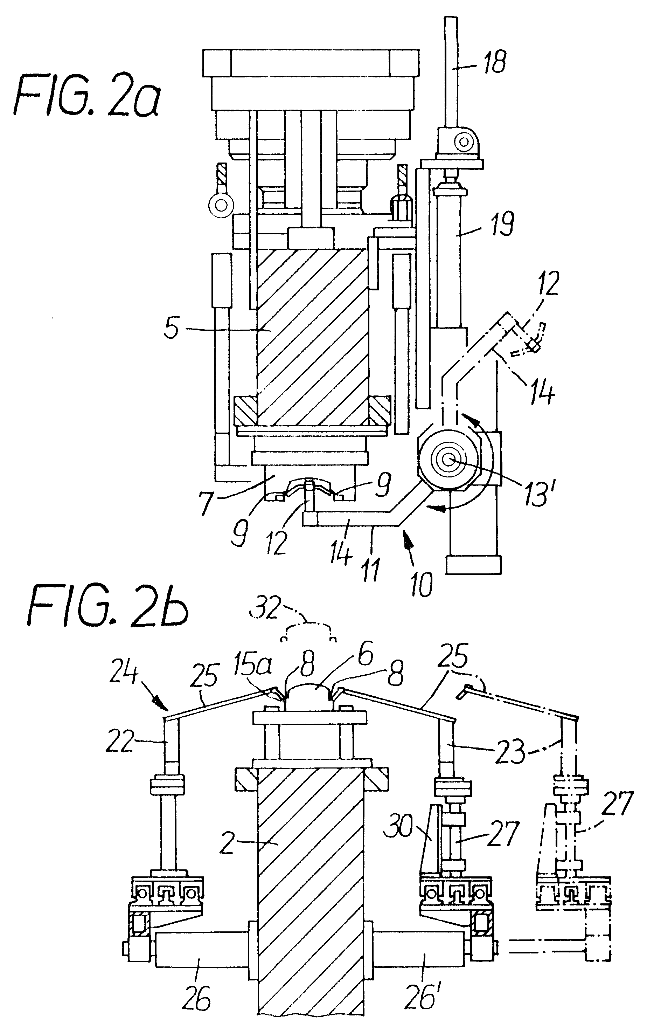

Wie Fig. 1 zeigt, weist die hydraulische Presse ein rahmenartiges Gestell 1 auf, das aus einem Pressentisch 2, jeweils seitlich nahe den beiden schmalen Stirnseiten des Pressentisches 2 angeordneten Säulen 3 und ein die beiden Säulen 3 miteinander verbindendes Querhaupt 4 auf, an dem ein oder mehrere nicht dargestellte Preßzylinder so symmetrisch angeordnet sind, daß deren Kolbenstangen auf den Pressenstößel 5 von oben wirken. Der Pressentisch 2 und der Pressenstößel 5 tragen jeweils ein Formwerkzeugteil, nämlich die Patrize 6 und die Matrize 7, welche jeweils Tauchkanten 8 und 9 ausbilden (Fig. 2a und 2b).

Der Matrize 7 bzw. dem Stößel 5 ist eine Reinigungsvorrichtung 10 zugeordnet, deren Halterung 11 für ein Reinigungswerkzeug 12 aus einer Welle 13′ und an dieser parallel zueinander angeordneten Schwenkarmen 14 besteht. Das an den freien Enden des Schwenkarmes 14 auswechselbar befestigte Reinigungswerkzeug 12 weist Blasleisten 15 auf, die in zwei Reihen parallel zueinander angeordnet und dergestalt mit in gleichen Abständen zueinander angeordneten Blasdüsen versehen sind, daß diese in der in Fig. 2a gezeigten Arbeitsposition auf die Tauchkanten 9 der Matrize 7 einwirken. Die Matrize 7 und damit ihre Tauchkanten 9 bildet im Grundriß ein langgestrecktes Rechteck, so daß an den kurzen Seiten dieses Rechtecks entsprechend kurze Tauchkanten ausgebildet werden. Auf diese wirken an den Enden der der Matrizen-Länge angepaßten Blasleisten 15 angeordnete Luftdüsen 16 ein, die zu diesem Zweck entsprechend angestellt sind. Sobald die Reinigungsvorrichtung 10 die Arbeitsstellung erreicht hat, wird ein mit der Welle 13′ verbundener pneumatischer Stellzylinder 17 eingeschaltet, so daß die Welle 13′ eine in Richtung ihrer Achse oszillierende Bewegung ausführt. Der Hub bzw. die Amplitude dieser Oszillation wird so eingestellt, daß die stirnseitigen Tauchkanten der Matrize 7 von den zugeordneten Enden der Blasleisten 15 nicht berührt werden. Nach Beendigung des Reinigungsvorgangs wird der Schwenkarm 14 in die Fig. 2a strichpunktiert angedeutete Ausschwenkstellung mittels eines Schwenkmotors 13 zurückgeschwenkt. Eine an zwei senkrecht am Pressenoberteil befestigten Säulen 18 jeweils angeordnete Führung 19 ermöglicht die Höhenverstellbarkeit der Reinigungsvorrichtung 10. Dazu ist ein Stellmotor 20 vorgesehen, der über eine Welle 21 beide Führungen 19 miteinander verbindet.

Der Patrize 6 ist - wie Fig. 2b zeigt - ein aus zwei Teilen 22 und 23 bestehendes Reinigungswerkzeug 24 zugeordnet, wobei die Teile 22, 23 jeweils an den Längsseiten des Pressentisches 2 befestigt sind. Die Teile 22 und 23 weisen - in gleicher Weise wie die reinigungsvorrichtung 10 - parallel zueinander angeordnete armförmige Halterungen 25 auf,an denen Blasleisten 15a angeordnet sind. Diese Blasleisten 15a sind an den freien Enden der Halterungen 25 in gleicher Weise wie die Blasleisten 15 parallel zueinander angeordnet. Die Blasdüsen der Blasleisten 15a wirken wieder auf die Tauchkanten 8 der Patrize 6. Der Teil 22 ist lediglich mittels eines am Pressentisch 2 angeflanschten pneumatischen Stellzylinders 26 auf den Pressentisch 1 zu bzw. von diesem weg bewegbar, während das in gleicher Weise mittels eines gegenüberliegend am Pressentisch angeordneten Stellzylinders 26' bewegbare Teil 23 mit Hilfe von senkrecht angeordneten Stellzylindern 27 zusätzlich ein senkrechte Hubbewegung ausführt. Diese Hubbewegung dient dem Zweck, eine Kollision des Reinigungswerkzeugs mit einem eingesetzten Einlegegerät für das Formteil zu vermeiden. Teil 23 wird somit gleichzeitig mit dem Entfernen aus der Arbeitsstellung nach unten bewegt.

Zum Reinigen der stirnseitigen Tauchkanten der Patrize 6 sind parallel zu diesen Tauchkanten 8 angestellte Blasleisten 28 vorgesehen, deren Blasdüsen in Arbeitsstellung auf diese Tauchkanten 8 einwirken. Sämtliche Blasdüsen sind so angestellt, daß sie jeweils auf die Gratwurzeln der Tauchkanten 8 wirken, wodurch ein leichteres Lösen der Verunreinigungen durch einen Abschäleffekt bewirkt wird. Die Blasleisten 28 sind an armförmigen Halterungen 25' angeordnet, die jeweils an besonderen Halterungen 29 beidendig neben dem Teil 23 angeordnet sind. Die Halterungen 29 sind ebenfalls wieder mittels Hubzylindern 27' höhenverstellbar, wobei die Hubzylinder 27' so angeordnet sind, daß sie zusammen mit dem Hubzylinder 27 in einer senkrechten Ebene liegen. Jedem der Hubzylinder 27 und 27' sind zwei senkrechte Führungen 30 zugeordnet. Während die Hubzylinder 27' mit einem Ende jeweils mit einer zum Teil 23 gehörenden Konsole 31 verbunden sind, ist der Hubzylinder 27 ebenso wie die zugeordneten Führungen 30 an einem Schlitten 32 befestigt, der mittels eines pneumatischen Antriebs wieder die oszillierenden Bewegungen der Blasleisten 15a bewirkt, die denen der Blasleisten 15 entsprechen. Der Luftzufuhr zu den Blasleisten bzw. Blasdüsen dienen flexible Schläuche 33, die an eine nicht dargestellte Versorgungsleitung angeschlossen sind.

Die Bewegungen der Reinigungsvorrichtung 10 und des Reinigungswerkzeuges 24 sind durch die Bewegungen des Pressenstößels 5 gesteuert, bzw. mit diesen Bewegungen synchronisiert. Zusätzlich können auch noch als Abstandsmesser arbeitende Sensoren für die Steuerung herangezogen werden. Dies kommt insbesondere dann in Frage, wenn kompliziert gestaltete Formwerkzeuge eingesetzt sind, so daß eine Anpassung der Reinigungswerkzeuge an die Geometrie des Formwerkzeugs mit erheblichem Aufwand verbunden wäre.

Es ist aber auch möglich, daß das Formwerkzeugteil zumindest zum Teil von einer einzigen Blasdüse abgefahren wird, wenn dies im Einzelfall mit vermindertem Aufwand verbunden ist. Selbstredend sind auch noch andere Varianten der Reinigungsvorrichtung zur Anpassung an verschiedene Arten und Formen von Maschinen und Formwerkzeugen möglich.

## Patentansprüche

1. Vorrichtung zum Reinigen eines Formwerkzeugs von Kunststoffverarbeitungsmaschinen, insbesondere eines Formwerkzeugs von hydraulischen Pressen zum Formteilverpressen von vorzugsweise faserverstärkten Kunststoffen, die mindestens ein an die zu reinigenden Flächen der beiden Teile - Patrize (6) und Matrize (7) - des Formwerkzeugs anstellbares Reinigungswerkzeug (12, 24) aufweist, das an einer an dem Träger des Formwerkzeugs bewegbar befestigten Halterung (11, 25) angeordnet und mit pneumatischen und/oder mechanischen Beaufschlagungselementen - vorzugsweise Blasdüsen - versehen ist, wobei zumindest Teile der Halterung (11, 25) zum Anstellen schwenkbar und/oder verschiebbar befestigt sind und die Bewegung mit dem Arbeitshub der Maschine synchronisiert ist, dadurch gekennzeichnet, daß jedem Teil des Formwerkzeugs - der Matrize (7) und der Patrize (6) - mindestens ein an einer separat zustellbaren Halterung (11, 25) befestigten Reinigungswerkzeug (12, 24) zugeordnet ist, wobei die Halterung (11) des der Matrize (7) zugeordneten Reinigungswerkzeuges (12) mittels eines Schwenkmotors (13) um eine quer zur Richtung des Pressenhubes mit Abstand zum Formwerkzeugteil verlaufende Achse so schwenkbar gelagert ist, daß die Blasdüsen in Arbeitsstellung in die Matrize (7) eingreifen, und die Halterungen (25) des der Patrize (6) zugeordneten Reinigungswerkzeugs (24) mittels Stellzylindern (26, 26') quer zur Richtung des Pressenhubes auf den Pressentisch (2) zu bzw. von diesem weg bewegbar sind.

2. Vorrichtung nach Anspruch 1, dadurch gekennzeichnet, daß das Reinigungswerkzeug (24) der Patrize (6) zwei beidseitig der Patrize (6) gegenüberliegend und symmetrisch zueinander angeordnete und bewegbare Teile (22 und 23) aufweist.

3. Vorrichtung nach Anspruch 2, dadurch gekennzeichnet, daß mindestens eines der beiden Teile (22, 23) zusätzlich in senkrechter Richtung, also in Richtung des Pressenhubs, verschiebbar ist.

4. Vorrichtung zum Reinigen eines Formwerkzeuges nach Anspruch 1 mit die Formteilkonturen umschließenden Tauchkanten (8, 9), dadurch gekennzeichnet, daß die Blasdüsen zumindest zum Teil zu Blasleisten (15,15a, 28) zusammengefaßt sind.

5. Vorrichtung nach Anspruch 4, dadurch gekennzeichnet, daß die Blasleisten (15, 15a) sich in Richtung der Tauchkanten (8, 9) des Formwerkzeugs und parallel zu diesem erstrecken und dieser Richtung oszillierend bewegbar sind.

6. Vorrichtung nach einem der Ansprüche 4 oder 5 wobei die Tauchkanten (8, 9) eine Gratwurzel aufweisen, dadurch gekennzeichnet, daß die Blasdüsen so angestellt und angeordnet sind, daß sie auf die Gratwurzel wirken.

7. Vorrichtung für eine Presse mit einer in diese einfahrbare Entnahmevorrichtung nach Anspruch 1, dadurch gekennzeichnet, daß die Halterung (11) des der Matrize (7) zugeordneten Reinigungswerkzeugs (12) an der der Entnahmevorrichtung abgewandte Seite der Presse angeordnet ist.

## Claims

1. Device for cleaning a mould of plastics processing machines, in particular a mould of hydraulic presses for producing mouldings of preferably fibre-reinforced plastics, which device comprises at least one cleaning tool (12, 24) which can be applied to the surfaces of the two parts - male mould (6) and female mould (7) - of the mould which are to be cleaned and is arranged on a holder (11, 25) which is secured in a mobile manner to the support of the mould, which tool is provided with pneumatic and/or mechanical impact elements - preferably blast nozzles -, at least parts of the holder (11, 25) being secured in a pivotable and/or displaceable manner for application purposes and the movement being synchronised with the working stroke of the machine, characterised in that at least one cleaning tool (12, 24) is associated with each part of the mould - the female mould (7) and the male mould (6) - and is secured to a holder (11, 25) which can be advanced separately, the holder (11) of the cleaning tool (12) associated with the female mould (7) being mounted so that it can pivot by means of a pivoting motor (13) about an axis extending transversely to the direction of the press stroke at a distance from the mould part such that the blast nozzles enter the female mould (7) in the working position, and the holders (25) of the cleaning tool (24) associated with the male mould (6) being movable by means of operating cylinders (26, 26') transversely to the direction of the press stroke onto the platen (2) towards or away from the latter.

2. Device according to claim 1, characterised in that the cleaning tool (24) of the male mould (6) comprises two mobile parts (22 and 23) which are arranged opposite one another and symmetrically with respect to one another on each side of the male mould (6).

3. Device according to claim 2, characterised in that at least one of the two parts (22, 23) can additionally be displaced in the vertical direction, i.e. in the direction of the press stroke.

4. Device for cleaning a mould according to claim 1 with plunge edges (8, 9) which enclose the moulding contours, characterised in that the blast nozzles are assembled at least in part to form blast strips (15, 15a, 28).

5. Device according to claim 4, characterised in that the blast strips (15, 15a) extend in the direction of the plunge edges (8, 9) of the mould and parallel to the latter and can be moved in an oscillating manner in this direction.

6. Device according to one of claims 4 and 5, wherein the plunge edges (8, 9) have a flash root, characterised in that the blast nozzles are applied and arranged so as to act on the flash root.

7. Device for a press with a removal device which can be moved into the latter according to claim 1, characterised in that the holder (11) of the cleaning tool (12) associated with the female mould (7) is arranged on the side of the press which is distant from the removal device.

## Revendications

1. Dispositif de nettoyage d'un outil de formage de machine d'usinage de matière plastique, en particulier d'un outil de formage de presses hydrauliques pour le formage par pressage de matières plastiques, de préférence renforcées par des fibres, présentant un outil de nettoyage (12, 24) pouvant se placer contre les surfaces des deux pièces - poinçon (6) et matrice (7) - de l'outil de formage, cet outil de nettoyage étant disposé sur un support (11, 25), fixé de façon mobile sur le porte-outil de formage, et étant muni d'organes pneumatiques et/ou mécaniques d'intervention - de préférence des buses de soufflage -, étant entendu qu'au moins des parties du support (11, 25) sont fixées, pour la mise en contact, de façon à pouvoir pivoter et/ou coulisser, et que leur mouvement est synchronisé avec la course de travail de la machine,
caractérisé en ce qu'à chaque pièce de l'outil de formage - poinçon (6) et matrice (7) -, est associé au moins un outil de nettoyage (12, 24) fixé sur un support que l'on peut faire avancer séparément (11, 25), étant entendu que le support (11) de l'outil de nettoyage (12) associé à la matrice (7) est monté de façon à pouvoir pivoter, au moyen d'un moteur de pivotement (13), autour d'un axe perpendiculaire à la direction de la course de pressage et situé une certaine distance de la pièce d'outil de formage, de telle façon que les buses de soufflage, en position de travail, agissent sur la matrice (7), et les supports (25) de l'outil de nettoyage (24), associées au poinçon (6), peuvent se déplacer, au moyen de vérins de positionnement (26, 26'), perpendiculairement à la direction de la course de pressage, vers la table de presse (2) ou s'en éloigner.

2. Dispositif suivant la revendication 1, caractérisé en ce que l'outil de nettoyage (24) du poinçon (6) présente deux pièces mobiles (22 et 23) disposées en face l'une de l'autre des deux côtés du poinçon (6), symétriquement l'une par rapport à l'autre.

3. Dispositif suivant la revendication 2, caractérisé en ce qu'au moins l'une des deux pièces (22 et 23) peut, de plus, coulisser suivant la direction verticale, c'est-à-dire suivant la direction de la course de pressage.

4. Dispositif de nettoyage d'un outil de formage, suivant la revendication 1, comportant des arêtes plongeantes (8, 9) entourant les contours des pièces de formage, caractérisé en ce que les buses de soufflage sont, au moint en partie, rassemblées pour constituer des rampes de soufflage (15, 15a, 28).

5. Dispositif suivant la revendication 4, caractérisé en ce que les rampes de soufflage (15, 15a) s'étendent en direction des arêtes plongeantes (8, 9) de l'outil de formage et parallèlement à celui-ci, et peuvent se déplacer en oscillant de cette direction.

6. Dispositif suivant la revendication 4 ou la revendication 5, dans le cas duquel les arêtes plongeantes (8, 9) présentent un talon d'ébarbage, caractérisé en ce que les buses de soufflage sont positionnées et disposées de façon à agir sur le talon d'ébarbage.

7. Dispositif de presse, comportant un dispositif d'enlèvement pouvant être introduit dans cette presse, suivant la revendication 1, caractérisé en ce que le support (11) de l'outil de nettoyage (12) associé à la matrice (7) est disposé du côté opposé au dispositif d'enlèvement.
